# EUROPEAN PATENT SPECIFICATION

(11) **EP 2 434 103 B1**
(45) Date of publication and mention of the grant of the patent: **26.11.2014**
(21) Application number: 10179458.4
(22) Date of filing: 24.09.2010
(51) Int. Cl.: F01D 15/10, F01D 13/00, F01D 15/12, F02C 7/36

(54) **High speed turbine arrangement**
Hochgeschwindigkeitsturbinenanordnung
Agencement de turbine à haute vitesse

(43) Date of publication of application: 28.03.2012
(73) Proprietor: Siemens Aktiengesellschaft, 80333 München (DE)
(72) Inventor: Nyqvist, Jari, 61234 Finspang (SE)

(56) References cited:
- EP-A1- 0 355 545
- EP-A2- 1 777 374
- FR-A1- 2 518 644
- MECH C: "A NEW CONCEPT IN MEDIUM STEAM TURBINES: THE TM RANGE", TECHNICAL REVIEW GEC ALSTHOM, GEC ALSTHOM, PARIS, FR, no. 18, 1 October 1995 (1995-10-01), pages 1-08, XP000552046, ISSN: 1148-2893

## Description

### Field of invention

The present invention relates to a turbine system, in particular a steam turbine system, to a method of producing a turbine system and to a method of operating a turbine system.

### Art Background

In small or medium sized power plants, such as solar power plants, combined cycle power plants or fossil power plants with supercritical steam data, it is beneficial to use smaller high-speed steam turbines with a high rotational speed in contrast to large steam turbines with a lower rotational speed.

In several power plants, a steam turbine is directly coupled to the generator. Because the rotational speed of a generator rotor in power plants is in general around e.g. 3000 or 3600 rpm, the rotational speed of a direct coupled turbine rotor must have the same rotational speed. Thus, a higher rotational speed of the direct coupled turbine rotor of the steam turbine is not possible.

Normally a specific volumetric flow (e.g. 3 m /s) and an inlet steam pressure are given, for which the turbines are designed. For a specific volumetric flow, there is a certain axial cross section area needed for the blade channel. The blade channel is defined by the gap between the surface of the shaft and e.g. the inner surface of the turbine house. A large shaft diameter causes a small blade channel and a smaller shaft diameter causes a large blade channel, where longer blades may be installed. The longer blades may be beneficial, as it minimizes the relative influence of end wall losses. However, longer blades cause higher stresses in the shaft, which means that for each blade stage, there is an optimal balance between a good efficiency and a good mechanical integrity of the blades. As the steam expands from turbine inlet pressure to the turbine outlet pressure, the volumetric flow increases, and each new blade stage in a turbine will have a new set of boundary conditions. All turbine stages are in general located on one common shaft, so that the blades of each turbine stage have the same rotational velocity, even if due to the volumetric flow increase a different rotational velocity would be more efficient.

XP 000552046 (Mech C.: "A new concept in medium steam turbines: The TM range") discloses a low pressure turbine and a high pressure turbine which are coupled to a gearbox. Moreover, a generator is coupled to the gearbox. The high pressure turbine comprises a steam inlet and the low pressure turbine comprises an axial exhaust. The exhausted steam from the high pressure turbine is provided to a steam inlet of the low pressure turbine.

In order to achieve a higher rotational velocity of the short blades, a large diameter of the turbine shaft to which the blades are mounted is applied, because the rotational velocity of the blades increases with a large distance to the rotational axis of the turbine shaft. This leads to a large shaft surface that has to be sealed with shaft seals, so that a large internal steam leakage and thus a decreasing of the efficiency may occur. Moreover, with a large diameter of the turbine shaft, the weight and costs of the material for the shaft are increased as well. Also the temperature changes, in particular during the initial start-up and during load changes of the turbine, may lead to a high stress of the material and thus to cracks in the design due to thermal expansion, for example.

### Summary of the Invention

It is an object of the present invention to provide a proper turbine system with a higher efficiency.

This object is solved by a turbine system, in particular a steam turbine system, a method of producing a turbine system and a method of operating a turbine system according to the independent claims.

According to a first aspect of the present invention, a turbine system, in particular a steam turbine system, is presented. The turbine system comprises a first turbine with a first shaft, a second turbine with a second shaft, a further turbine with a further shaft and a gear with a third shaft. The gear is coupled to the first shaft, the second shaft and the further shaft in such a way that the first shaft and the second shaft drive the third shaft. The gear comprises a gear ratio such that a third rotational speed of the third shaft is lower than a first rotational speed of the first shaft. A diameter of the first shaft and a diameter of the second shaft are smaller than 200 mm.

According to a further aspect of the present invention, a method of producing a turbine system, in particular a steam turbine system, is presented. A gear is coupled to a first shaft, a second shaft and a further shaft in such a way that the first shaft, the second shaft and the further shaft drive a third shaft of the gear. The gear comprises a gear ratio such that a third rotational speed of the third shaft is lower than a first rotational speed of the first shaft. A diameter of the first shaft and a diameter of the second shaft are smaller than 200 mm.

According to a further aspect of the present invention, a method of operating a turbine system, in particular a steam turbine system, is presented. A third shaft of the gear is driven by a first shaft of a first turbine coupled to the gear, by a second shaft of a second turbine coupled to the gear and by a further shaft of a further turbine coupled to the gear. The gear comprises a gear ratio such that a third rotational speed of the third shaft is lower than a first rotational speed of the first shaft. A diameter of the first shaft and a diameter of the second shaft are smaller than 200 mm.

By the present invention, the turbine system comprises two turbines, namely the first turbine and the second turbine, wherein each turbine comprises a respective shaft. The shafts of the turbines are each coupled to the gear separately from each other. The gear comprises a defined gear ratio, so that the rotational speed of the first shaft and/or the second shaft defines the rotational speed of the third shaft. The rotational speed of the third shaft is e.g. 3000 rpm or 3600 rpm for generating 50 Hz or 60 Hz grid frequency, so that the gear ratio of the gear is adjusted to achieve the rotational speed of the third shaft.

In the first turbine and/or the second turbine, the incoming steam expands and blades in each turbine generate a rotation of the shafts. Hence, mechanical energy is transferred by the rotation of the respective shafts to the gear. The incoming input steam into the first turbine and/or the second turbine may comprise a supercritical steam pressure of approximately 200 - 300 bar and more and an incoming steam temperature of more than 600°C (Celsius). After flowing through the first turbine and the second turbine the steam may be expanded, so that the steam comprises a steam pressure and a steam temperature that is low enough to be fed into a reheater for reheating the steam.

In other words, by the present invention, the first turbine and the second turbine are not directly coupled to the third shaft that is connected e.g. to a generator, so that the rotational speed of the shafts of the first turbine and the second turbine do not need to have the same slow rotational speed of the third shaft driving the generator.

Moreover, as described above, the steam expands from the turbine inlet pressure to the turbine outlet pressure, so that the volumetric flow increases and each new blade stage will have a new set of boundary conditions. In particular, when dividing the turbine stages of one common turbine in e.g. two turbines, namely the first turbine and the second turbine, the first turbine may comprise an optimized rotational velocity of its first shaft and the second turbine has an optimized rotational speed of its second shaft, wherein each turbine is adjusted to its turbine inlet pressure of the steam. Because the separated first and second turbines may be designed for different steam characteristics, the cross section area of the blade channel of the first and the second turbine may be optimized and customized to the steam characteristics and to the rotational velocity of the blades of the first and second turbine. To create a specific cross section area of the blade channel, it can be seen that if the diameter of the shaft is reduced, the difference between the outer diameter (tip end of a blade) and an inner diameter (surface of shaft, root end of the blade) will be larger, so that larger blades with lesser influence of side wall losses in comparison to short blades may be applied.

Hence, due to the adaption of the steam characteristics of the first turbine and the second turbine in comparison to the third turbine, the blade path and the blade length (length in radial direction to the rotational axis of the respective shaft) may be elongated and thus optimized in the first and second turbines, so that the blades may have a better performance. The shafts of the first and second turbines may be e.g. formed with a smaller size in comparison to the third shaft, so that the size of blade channel is increased. A smaller diameter of the shafts leads also to a reduced surface of the shafts, so that internal steam leakage may be reduced because a smaller surface has to be sealed. Moreover, the design of the high-speed first and second turbines is smaller in size with respect to the conventional large, slower rotating turbines, so that the manufacturing costs and the weight are reduced. Moreover, a quicker start-up and a faster adaption to load changes of the power plant are possible. This may be beneficial in particular for smaller power plants, such as solar power plants. Moreover, this may be beneficial to solar power plants, where a daily start-up and daily shut-down is necessary.

According to further exemplary embodiment, the third rotational speed of the third shaft is lower than the first rotational speed of the first shaft and the second rotational speed of the second shaft.

According to a further exemplary embodiment, the first turbine and the second turbine are arranged in a common turbine housing. The turbine housing may comprise two shaft connections (e.g. openings and/or couplings) for providing a connection between the first shaft to the gear and a connection between the second shaft and the gear. The first turbine and the second turbine may also comprise respective first and second housings that are separate to each other.

According to a further exemplary embodiment, the turbine system further comprises the generator for generating electrical energy, wherein the generator is coupled to the gear in such a way that the third shaft drives the generator. As already described above, the third shaft has a lower rotational speed in comparison to the first shaft and/or the second shaft. The third shaft comprises in general a larger diameter with respect to the first shaft or the second shaft.

According to a further exemplary embodiment, the first turbine receives first steam for driving the shaft and the second turbine receives second steam for driving the second shaft. The second steam is an output steam of the first turbine. In other words, the turbines are connected in series with respect to the steam flow. In particular, the steam flows in series from e.g. a steam generation device to the first turbine, then to the second turbine and finally exits from the second turbine. After leaving the second turbine, the steam may be fed to a reheater device for reheating the steam.

In an alternative embodiment, the first steam and the second steam may be generated by the steam generating device and from the steam generating device, the first steam may be directly fed from the steam generating device into the first turbine and the second steam may be directly fed from the steam generating device into the second turbine.

Depending on the electrical energy that is generated by the generator, the gear has to drive the third shaft with a predetermined rotational speed and with a predetermined torque. In particular, the first turbine, the second turbine and/or both turbines may be individually connected (coupled) to the gear with its first shaft and/or its second shaft in order to drive the gear and thus the third shaft. In other words, if the generator needs less mechanical energy, because less electrical energy is required, only one of the first turbine and/or the second turbine may be in operation and connected to the gear. Thus, the described turbine system, not all turbines have to be connected to the gear even when a less electrical energy should be produced by the generator. Thus, the turbine system is more effective.

According to a further exemplary embodiment, the diameter of the third shaft is larger than approximately 600 mm (Millimeter), in particular larger than approximately 800 mm or larger than approximately 1000 mm.

In particular, the diameter of the third shaft has more than the double size or more than the triple size of the diameter of the first shaft and/or the diameter of the second shaft.

According to a further exemplary embodiment, the first rotational speed and/or second rotational speed are greater than approximately 5000 rpm, 7000 rpm (rounds per minute), in particular greater than approximately 8000 rpm or approximately greater 10000 rpm.

According to a further exemplary embodiment, the third rotational speed is lower than approximately 5000 rpm, in particular lower than approximately 4000 rpm or lower than approximately 3000 rpm. If the third shaft is directly coupled to the generator shaft, so that the third shaft and the generator shaft comprises the same rotary speed, the third rotational speed is 3000 rpm for supplying power to a 50Hz grid or 3600 rpm for supplying power to a 60 Hz grid.

In particular, the first rotational speed and/or second rotational speed are greater than the 1, 5 higher rotational speed, the double rotational velocity or greater than the triple rotational velocity of the third rotational speed of the third shaft.

In particular, the gear ratio of the gear may be adapted in such a way, that the third rotational speed of the third shaft may be slower than the further rotational speed of the further shaft.

In further exemplary embodiments also a plurality of turbines may be coupled to the gear, so that 4, 5, or more individual turbines may be coupled to the gear for driving the third shaft. The more turbines are coupled to the gear, the smaller may be the diameter of the shafts of the turbine, because the driving torque for driving the third shaft of the gear is split up to each of the shafts of the turbines that are connected to the gear.

Moreover, each individual turbine may be flexibly coupled to the gear, so that dependent on the required torque of the third shaft, several turbines may be coupled with or decoupled from the gear. Thus, a higher efficiency of the turbine system may be achieved.

According to a further exemplary embodiment of the operating method, the gear ratio may be individually controllable and adapted, so that the rotational speed and the driving torque of the third shaft may be individually adjusted with respect
to the incoming torques and rotational speeds of the respective shafts from the respective turbines.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematical view of a turbine system; and
Fig. 2 shows a schematical view of a cross-section of a turbine of the turbine system.

### Detailed Description

The illustrations in the drawings are schematical. It is noted that in different figures, similar or identical elements are provided with the same reference signs.

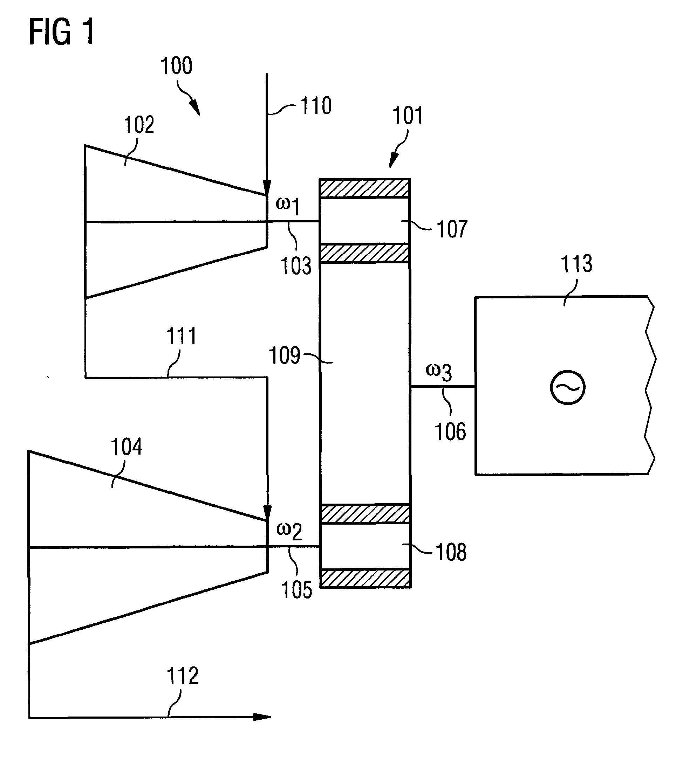

**Fig. 1** shows for a better understanding of the invention a turbine system 100, which is in particular a steam turbine system. Steam as a working medium for the turbine system 100 may be generated by a steam generator that heats for example water. The steam system 100 comprises a first turbine 102 with a first shaft 103, a second turbine 104 with a second shaft 105 and a gear 101 with a third shaft 106. The gear 101 is coupled to the first shaft 103 and the second shaft 105 in such a way that the first shaft 103 and the second shaft 105 drive the third shaft 106. The gear 101 comprises a gear ratio such that a third rotational speed ω3 of the third shaft 106 is lower than a first rotational speed ω1 of the first shaft 103 and/or of a second rotational speed ω2 of the second shaft 105.

The turbine system further comprises a further turbine with a further shaft (not shown in Fig. 1). The gear 101 is coupled to the further shaft in such a way that the first shaft 103, the second shaft 105 and the further shaft drive the third shaft 106.

As shown in Fig. 1, the first turbine 102 and the second turbine 104 comprises a separate first shaft 103 and second shaft 105.

An incoming first fluid stream 110 is fed to the first turbine 102. Blades attached to the first shaft 103 are driven by the first fluid stream 110, so that the first shaft 103 is driven with the first rotational speed ω1. Thereby, the first fluid stream 110 expands and a second fluid stream 111 with a lower pressure as the first fluid stream 110 exits the first turbine 102.

The second fluid stream 111 enters the second turbine 104, so that the second fluid stream 111 drives the second shaft 105 with a second rotational speed ω2. Thereby the second fluid stream 111 expands and a third fluid stream 112 exits the second turbine 104. The third fluid stream 112 may be fed to a further turbine that is connected to the gear 101 or may be fed to a reheater device for being reheated.

The first shaft 103 and the second shaft 105 are for example coupled respectively to a first gear wheel 107 and a respectively second gear wheel 108 of the gear 101. The first gear wheel 107 and the second gear wheel 108 are driven by the rotational speed ω1 and ω2 of the respective first shaft 103 and second shaft 105. In particular, the first gear wheel 107 and the second gear wheel 108 comprise a smaller diameter with respect to a third gear wheel 109 that is driven by the first gear wheel 107 (e.g. a pinion) and the second gear wheel 108 (e.g. a pinion). To the third gear wheel 109, which comprises a larger diameter with respect to the first and second gear wheel 107, 108, the third shaft 106 is coupled. The third shaft 106 comprises a third rotational speed ω3. The gear ratio of the gear 101 may be defined by the relation between the diameter of the first and second gear wheels 107, 108 with respect to the third gear wheel 109.

Moreover, in an exemplary embodiment, the gear ratio of the gear 101 may be flexibly amended according to a required rotational speed ω3 and a required torque of the third shaft 106.

The gear 101 may be a spur gear, a planetary gear, an epicyclic gear, a double helical gear, a bevel gear or a hypoid gear.

To the third shaft 106, a generator 113 is coupled, so that the third rotational speed ω3 of the third shaft 106 and the torque of the third gear 106 drive the generator 113.

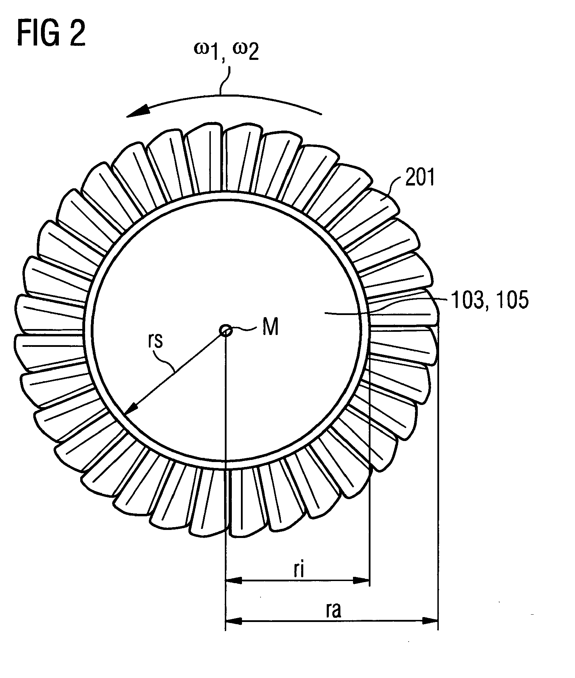

**Fig. 2** illustrates schematically for a better understanding of the invention a cross-section of a first and a second turbine 102, 104. The rotational speed ω1, ω2 may be defined by the outer radius ra, i.e. the tip end of the blade, and the angular speed of the respective shafts 103, 105. The respective shafts 103, 105 are defined by shaft radius rs. To the outer surface of the shaft 103, 105 the blades 201 are installed. The length of the blades 201 are defined by the length between the inner radius ri of the blade 201 and the outer radius ra of the blade 201 with respect to the center M of the shaft 103, 105.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Steam turbine system (100), comprising
a first turbine (102) with a first shaft (103),
a second turbine (104) with a second shaft (105),
a further turbine with a further shaft, and
a gear (101) with a third shaft (106),
wherein the gear (101) is coupled to the first shaft (103), the second shaft (105) and the further shaft in such a way that the first shaft (103), the second shaft (105) and the further shaft drive the third shaft (106),
wherein the gear (101) comprises a gear ratio such that a third rotational speed (ω3) of the third shaft (106) is lower than a first rotational speed (ω1) of the first shaft (103), and
wherein a diameter of the first shaft (103) and a diameter of the second shaft (105) are smaller than 200 mm.

2. Steam turbine system (100) according to claim 1,
wherein the third rotational speed (ω3) of the third shaft (106) is lower than the first rotational speed (ω1) of the first shaft (103) and the second rotational speed (ω2) of the second shaft (105).

3. Steam turbine system (100) according to claim 1 or 2,
wherein the first turbine (102) and the second turbine (104) are arranged in a common turbine housing.

4. Steam turbine system (100) according to one of the claims 1 to 3, further comprising
a generator (113) for generating electrical energy,
wherein the generator (113) is coupled to the gear (101) in such a way that the third shaft (106) drives the generator (113).

5. Steam turbine system (100) according to one of the claims 1 to 4,
wherein the first turbine (102) receives first steam for driving the first shaft (103), and
wherein the second turbine (104) receives second steam for driving the second shaft (105),
wherein the second steam is an output steam of the first turbine (102).

6. Steam turbine system (100) according to one of the claims 1 to 5,
wherein a diameter of the third shaft (106) is larger than 800 mm.

7. Steam turbine system (100) according to one of the claims 1 to 6,
wherein the first rotational speed (ω1) and/or the second rotational speed (ω2) is greater than 5000 rpm.

8. Steam turbine system (100) according to one of the claims 1 to 7,
wherein the third rotational speed (ω3) is 3000 rpm or 3600 rpm.

9. Method of producing a steam turbine system (100), the method comprising,
coupling a gear (101) to a first shaft (103), a second shaft (105) and a further shaft in such a way that the first shaft (103), the second shaft (105) and the further shaft drive a third shaft (106) of the gear (101),
wherein the gear (101) comprises a gear ratio such that a third rotational speed (ω3) of the third shaft (106) is lower than a first rotational speed (ω1) of the first shaft (103) and
wherein a diameter of the first shaft (103) and a diameter of the second shaft (105) are smaller than 200 mm.

10. Method of operating a steam turbine system (100), the method comprising
driving a third shaft (106) of the gear (101) by a first shaft (103) of a first turbine (102) coupled to the gear (101), by a second shaft (105) of a second turbine (104) coupled to the gear (101) and by a further shaft of a further turbine coupled to the gear (101),
wherein the gear (101) comprises a gear ratio such that a third rotational speed (ω3) of the third shaft (106) is lower than a first rotational speed (ω1) of the first shaft (103), and
wherein a diameter of the first shaft (103) and a diameter of the second shaft (105) are smaller than 200 mm.

## Patentansprüche

1. Dampfturbinensystem (100), das Folgendes umfasst:
eine erste Turbine (102) mit einer ersten Welle (103),
eine zweite Turbine (104) mit einer zweiten Welle (105),
eine weitere Turbine mit einer weiteren Welle und
ein Getriebe (101) mit einer dritten Welle (106),
wobei das Getriebe (101) mit der ersten Welle (103), der zweiten Welle (105) und der weiteren Welle auf eine solche Weise gekoppelt ist, dass die erste Welle (103),
die zweite Welle (105) und die weitere Welle die dritte Welle (106) antreiben,
wobei das Getriebe (101) ein solches Übersetzungsverhältnis umfasst, dass eine dritte Rotationsgeschwindigkeit (ω3) der dritten Welle (106) geringer ist als eine erste Rotationsgeschwindigkeit (ω1) der ersten Welle (103), und
wobei ein Durchmesser der ersten Welle (103) und ein Durchmesser der zweiten Welle (105) kleiner als 200 mm sind.

2. Dampfturbinensystem (100) nach Anspruch 1,
wobei die dritte Rotationsgeschwindigkeit (ω3) der dritten Welle (106) geringer ist als die erste Rotationsgeschwindigkeit (ω1) der ersten Welle (103) und die zweite Rotationsgeschwindigkeit (ω2) der zweiten Welle (105).

3. Dampfturbinensystem (100) nach Anspruch 1 oder 2,
wobei die erste Turbine (102) und die zweite Turbine (104) gemeinsam in einem Turbinengehäuse angeordnet sind.

4. Dampfturbinensystem (100) nach einem der Ansprüche 1 bis 3, das ferner Folgendes umfasst:
einen Generator (113) zum Erzeugen von elektrischer Energie,
wobei der Generator (113) auf eine solche Weise an das Getriebe (101) gekoppelt ist, dass die dritte Welle (106) den Generator (113) antreibt.

5. Dampfturbinensystem (100) nach einem der Ansprüche 1 bis 4,
wobei die erste Turbine (102) ersten Dampf zum Antreiben der ersten Welle (103) erhält und
wobei die zweite Turbine (104) zweiten Dampf zum Antreiben der zweiten Welle (105) erhält,
wobei es sich bei dem zweiten Dampf um einen abgegebenen Dampf aus der ersten Turbine (102) handelt.

6. Dampfturbinensystem (100) nach einem der Ansprüche 1 bis 5,
wobei ein Durchmesser der dritten Welle (106) größer ist als 800 mm.

7. Dampfturbinensystem (100) nach einem der Ansprüche 1 bis 6,
wobei die erste Rotationsgeschwindigkeit (ω1) und/ oder die zweite Rotationsgeschwindigkeit (ω2) mehr als 5.000 U/min beträgt.

8. Dampfturbinensystem (100) nach einem der Ansprüche 1 bis 7,
wobei die dritte Rotationsgeschwindigkeit (ω3) 3.000 U/min oder 3.600 U/min beträgt.

9. Verfahren zum Herstellen eines Dampfturbinensystems (100), wobei das Verfahren Folgendes umfasst:
Koppeln eines Getriebes (101) mit einer ersten Welle (103), einer zweiten Welle (105) und einer weiteren Welle auf eine solche Weise, dass die erste Welle (103), die zweite Welle (105) und die weitere Welle eine dritte Welle (106) des Getriebes (101) antreiben,
wobei das Getriebe (101) ein solches Übersetzungsverhältnis umfasst, dass eine dritte Rotationsgeschwindigkeit (ω3) der dritten Welle (106) geringer ist als eine erste Rotationsgeschwindigkeit (ω1) der ersten Welle (103), und
wobei ein Durchmesser der ersten Welle (103) und ein Durchmesser der zweiten Welle (105) kleiner als 200 mm sind.

10. Verfahren zum Betreiben eines Dampfturbinensystems (100), wobei das Verfahren Folgendes umfasst:
Antreiben einer dritten Welle (106) des Getriebes (101) durch eine mit dem Getriebe (101) gekoppelte erste Welle (103) einer ersten Turbine (102), durch eine mit dem Getriebe (101) gekoppelte zweite Welle (105) einer zweiten Turbine (104) und durch eine mit dem Getriebe (101) gekoppelte weitere Welle einer weiteren Turbine,
wobei das Getriebe (101) ein solches Übersetzungsverhältnis umfasst, dass eine dritte Rotationsgeschwindigkeit (ω3) der dritten Welle (106) geringer ist als eine erste Rotationsgeschwindigkeit (ω1) der ersten Welle (103), und
wobei ein Durchmesser der ersten Welle (103) und ein Durchmesser der zweiten Welle (105) kleiner als 200 mm sind.

## Revendications

1. Système de turbine à vapeur (100), comprenant une première turbine (102) avec un premier arbre (103),
une deuxième turbine (104) avec un deuxième arbre (105), une autre turbine avec un autre arbre, et
une transmission (101) avec un troisième arbre (106),
dans lequel la transmission (101) est couplée au premier arbre (103), au deuxième arbre (105) et à l'autre arbre de telle manière que le premier arbre (103), le deuxième arbre (105) et l'autre arbre entraînent le troisième arbre (106)
dans lequel la transmission (101) comprend un rapport de transmission tel qu'une troisième vitesse de rotation (ω3) du troisième arbre (106) est inférieure à une première vitesse de rotation (ω1) du premier arbre (103), et
dans lequel un diamètre du premier arbre (103) et un diamètre du deuxième arbre (105) sont inférieurs à 200 mm.

2. Système de turbine à vapeur (100) selon la revendication 1,
dans lequel la troisième vitesse de rotation (ω3) du troisième arbre (106) est inférieure à la première vitesse de rotation (ω1) du premier arbre (103) et à la deuxième vitesse de rotation (ω2) du deuxième arbre (105).

3. Système de turbine à vapeur (100) selon la revendication 1 ou 2,
dans lequel la première turbine (102) et la deuxième turbine (104) sont agencées dans un carter de turbine commun.

4. Système de turbine à vapeur (100) selon l'une quelconque des revendications 1 à 3, comprenant en outre
une génératrice (113) permettant de générer de l'énergie électrique,
dans lequel la génératrice (113) est couplée à la transmission (101) de telle manière que le troisième arbre (106) entraîne la génératrice (113).

5. Système de turbine à vapeur (100) selon l'une quelconque des revendications 1 à 4,
dans lequel la première turbine (102) reçoit une première vapeur permettant d'entraîner le premier arbre (103), et
dans lequel la deuxième turbine (104) reçoit une deuxième vapeur permettant d'entraîner le deuxième arbre (105),
dans lequel la deuxième vapeur est une vapeur produite par la première turbine (102).

6. Système de turbine à vapeur (100) selon l'une quelconque des revendications 1 à 5,
dans lequel un diamètre du troisième arbre (106) est supérieur à 800 mm.

7. Système de turbine à vapeur (100) selon l'une quelconque des revendications 1 à 6,
dans lequel la première vitesse de rotation (ω1) et/ou la deuxième vitesse de rotation (ω2) est supérieure à 5 000 tpm.

8. Système de turbine à vapeur (100) selon l'une quelconque des revendications 1 à 7,
dans lequel la troisième vitesse de rotation (ω3) est de 3 000 tpm ou 3 600 tpm.

9. Procédé de production d'un système de turbine à vapeur (100), le procédé comprenant l'étape consistant à,
coupler une transmission (101) à un premier arbre (103), à un deuxième arbre (105) et à un autre arbre de telle manière que le premier arbre (103), le deuxième arbre (105) et l'autre arbre entraînent un troisième arbre (106) de la transmission (101),
dans lequel la transmission (101) comprend un rapport de transmission tel qu'une troisième vitesse de rotation (ω3) du troisième arbre (106) est inférieure à une première vitesse de rotation (ω1) du premier arbre (103) et
dans lequel un diamètre du premier arbre (103) et un diamètre du deuxième arbre (105) sont inférieurs à 200 mm.

10. Procédé de fonctionnement d'un système de turbine à vapeur (100), le procédé comprenant l'étape consistant à
entraîner un troisième arbre (106) de la transmission (101) grâce à un premier arbre (103) d'une première turbine (102) couplé à la transmission (101), grâce à un deuxième arbre (105) d'une deuxième turbine (104) couplé à la transmission (101) et grâce à un autre arbre d'une autre turbine couplé à la transmission (101),
dans lequel la transmission (101) comprend un rapport de transmission tel qu'une troisième vitesse de rotation (ω3) du troisième arbre (106) est inférieure à une première vitesse de rotation (ω1) du premier arbre (103), et
dans lequel un diamètre du premier arbre (103) et un diamètre du deuxième arbre (105) sont inférieurs à 200 mm.
